(19) Europäisches Patentamt
European Patent Office
Office européen des brevets

(11) **EP 4 597 204 A1**

(12) **EUROPEAN PATENT APPLICATION**
published in accordance with Art. 153(4) EPC

(43) Date of publication:
**06.08.2025 Bulletin 2025/32**

(21) Application number: 23935943.3

(22) Date of filing: **05.05.2023**

(51) International Patent Classification (IPC):
**G02B 27/01** (2006.01) **G02B 30/27** (2020.01)

(52) Cooperative Patent Classification (CPC):
**G02B 27/01; G02B 30/27**

(86) International application number:
**PCT/CN2023/092367**

(87) International publication number:
**WO 2024/229614 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: Beijing Shiyan Technology Co., Ltd.
**Beijing 100176 (CN)**

(72) Inventors:
• **LIU, Yujie**
  **Beijing 100176 (CN)**

• **LIANG, Pengxia**
  **Beijing 100176 (CN)**
• **CHENG, Fang**
  **Beijing 100176 (CN)**
• **WU, Qian**
  **Beijing 100176 (CN)**
• **HONG, Tao**
  **Beijing 100176 (CN)**

(74) Representative: **Cohausz & Florack
Patent- & Rechtsanwälte
Partnerschaftsgesellschaft mbB
Bleichstraße 14
40211 Düsseldorf (DE)**

(54) **LIGHT-FIELD DISPLAY APPARATUS AND WEARABLE DEVICE**

(57) A light-filed display apparatus and a wearable device, the light-filed display apparatus includes: a display panel (1), including a plurality of pixels (2); an imaging structure (3), located at a light emitting side of the display panel (1); where the imaging structure (3) is configured to: image light emitted from the display panel (1), so that the light emitted from the display panel (1) forms a real image on a first plane (4); the first plane (4) is located at a side of the imaging structure (3) away from the display panel (1); a transmission lens structure (5), located at a side of the imaging structure (3) away from the display panel (1); the transmission lens structure (5) is configured to: amplify the real image to form a virtual image and enable a pupil of a human eye (6) to receive the virtual image; the virtual image received by a pupil of a single eye is formed by light emitted from at least two pixels (2).

FIG. 2

**EP 4 597 204 A1**

## Description

### Technical Field

The present disclosure relates to the field of display technology, and in particular to a light-filed display apparatus and a wearable device.

### Background

With the development of display technology, more and more attention has been paid to the three dimensional (3D) display technology. Three-dimensional display technology can make the display picture become three-dimensional and lifelike.

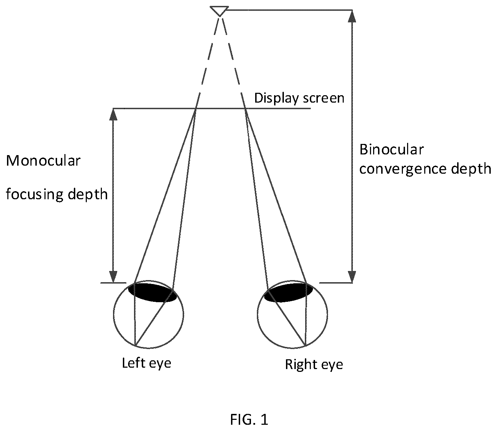

In a conventional augmented reality display system, parallax 3D is formed by giving pictures with different parallaxes to left and right eyes respectively. However, in this scheme, as shown in FIG. 1, human eyes are induced to recognize a corresponding depth of field by intersection of light from the left and right eyes, then binocular induced monocular focusing depth is not in the same plane as the clearest depth of the monocular image, and thus the human eyes may perceive convergence conflict, causing visual fatigue.

### Summary

Embodiments of the present disclosure provide a light-filed display apparatus, including:

> a display panel, including a plurality of pixels;
> an imaging structure, located at a light emitting side of the display panel; where the imaging structure is configured to: image light emitted from the display panel, so that the light emitted from the display panel forms a real image on a first plane; the first plane is located at a side of the imaging structure away from the display panel;
> a transmission lens structure, located at a side of the imaging structure away from the display panel; where the transmission lens structure is configured to: amplify the real image to form a virtual image and enable a pupil of a human eye to receive the virtual image; the virtual image received by a pupil of a single eye is formed by light emitted from at least two pixels.

In some embodiments, the imaging structure includes a plurality of micro lenses arranged in an array; focal lengths of the plurality of micro lenses are same.

In some embodiments, a focal point of the transmission lens structure is located on the first plane.

In some embodiments, the display panel includes a plurality of pixels; the pixels are in one-to-one correspondence with the micro lenses.

In some embodiments, a distance H1 between the transmission lens structure and the imaging structure satisfies:

$$P1/H1=EB/ER;$$

where EB is an eye movement distance, ER is a distance from the human eye to the transmission lens structure, and P1 is a width of the display panel in any eye movement distance direction.

In some embodiments, the pixel includes a plurality of sub-pixel units; the display panel includes a first light emitting plane; light emitting colors of the plurality of sub-pixel units on the first light emitting plane are different;

> a distance a between the micro lens and the first light emitting plane satisfies:

$$\tan fov1 = \frac{D1}{H1} = \frac{SS}{a};$$

where SS is an aperture of the micro lens, D1 is an aperture of the transmission lens structure, and fov1 is a field of view of the micro lens.

In some embodiments, in the any eye movement distance direction, the plurality of pixels are divided into a plurality of pixel rows; the pixel row includes v pixels arranged along the eye movement distance direction, where v is an integer greater than 2; the aperture SS of the micro lens satisfies:

$$SS=P1/v.$$

In some embodiments, v is less than or equal to 30.

In some embodiments, a focal length F1 of the transmission lens structure satisfies:

$$\frac{1}{ER} + \frac{1}{H1} = \frac{1}{F1}.$$

In some embodiments, a distance b between the first plane and the micro lens satisfies B = H1-a-F1.

In some embodiments, a distance between the plurality of micro lenses and the transmission lens structure is less than or equal to a focal length of the transmission lens structure.

In some embodiments, the display panel includes a plurality of pixel groups; the pixel includes a plurality of sub-pixel units; the display panel includes a first light emitting plane; light emitting colors of the plurality of sub-pixel units on the first light emitting plane are different;

a distance a between the micro lens and the first light emitting plane satisfies:

$$\tan fov1 = \frac{EB}{H1} = \frac{SS}{a};$$

where fov1 is a field of view of the micro lens, EB is an eye movement distance, H1 is a distance between the transmission lens structure and the micro lens, and SS is an aperture of the micro lens.

In some embodiments, a focal length F1 of the transmission lens structure satisfies: $\tan\frac{fov2}{2} = \frac{P1/2}{F1}$ ; where P1 is a width of the display panel in any eye movement distance direction, and fov2 is a field of view of the transmission lens structure.

In some embodiments, a distance H1 between the micro lens and the transmission lens structure is equal to a focal length F1 of the transmission lens structure, a distance between the first light emitting plane and the micro lens is larger than the focal length of the micro lens;

a distance a between the micro lens and the first light emitting plane satisfies: $\tan fov 1 = \frac{EB}{F1} = \frac{SS}{a}$ .

In some embodiments, a distance H1 between the micro lens and the transmission lens structure is less than a focal length F1 of the transmission lens structure, a distance between the first light emitting plane and the micro lens is greater than the focal length of the micro lens.

In some embodiments, an aperture SS of the micro lens satisfies:
SS = v × P2, where P2 is a pixel size in any eye movement distance direction.

In some embodiments, a distance b between the first plane and the micro lens satisfies:

$$\frac{1}{-L1} + \frac{1}{F1-b} = \frac{1}{F1};$$

where L1 is a distance between an optimal depth of field plane and the transmission lens structure.

In some embodiments, the imaging structure further includes:
a first substrate located between the plurality of micro lenses and the display panel and bonded to the display panel.

In some embodiments, the imaging structure further includes:
a bonding frame located between the plurality of micro lenses and the display panel and bonded to the display panel in a peripheral region of the display panel.

In some embodiments, the imaging structure further includes:
a first planarization layer located at a side of the micro lens away from the display panel.

In some embodiments, the micro lens is a spherical lens;
a curved region of the spherical lens faces the transmission lens structure.

In some embodiments, the micro lens includes a first cylindrical lens and a second cylindrical lens that are stacked; an extending direction of the first cylindrical lens and an extending direction of the second cylindrical lens intersect;
a curved region of the first cylindrical lens and a curved region of the second cylindrical lenses face the transmission lens structure.

In some embodiments, the transmission lens structure includes a plurality of lenses; the plurality of lenses include at least one of a straight-through lens, a free-form surface lens or a Fresnel lens.

In some embodiments, the transmission lens structure is a folded light path structure.

In some embodiments, the pixel includes a plurality of sub-pixel units; the sub-pixel unit includes a plurality of sub-pixels with a same light emitting color;

the sub-pixel includes:

a color film; a light emitting color of the color film corresponds to a color of the sub-pixel; a plane of a surface of the color film facing a side of the micro lens is the first light emitting plane.

In some embodiments, the sub-pixel further includes:

a light emitting device located at a side of the color film away from the micro lens.

In some embodiments, light emitting colors of a plurality of light emitting devices included in the display panel are same.

In some embodiments, the color film extends to a region between adjacent sub-pixels; color films included in two adjacent sub-pixels belonging to different sub-pixel units are stacked in a region between the two adjacent sub-pixels.

In some embodiments, the sub-pixel further includes:

a thin film transistor located at a side of the color film away from the micro lens;
a pixel electrode located between the thin film transistor and the color film.

In some embodiments, the pixel includes a plurality of sub-pixel units; the sub-pixel unit includes a plurality of sub-pixels with a same light emitting color;

the sub-pixel includes a light emitting device; in the pixel, light emitting colors of the light emitting device included in sub-pixel units of different types are different;
the light emitting device includes a light emitting layer, and the first light emitting plane is a light emitting surface of the light emitting layer.

In some embodiments, the display panel further includes:

an encapsulation layer located at a side of the light emitting device facing the imaging structure, and including a first inorganic encapsulation layer and a second inorganic encapsulation layer sequentially stacked on a side of the light emitting device facing the imaging structure;
a second planarization layer located at a side of the second inorganic encapsulation layer away from the first inorganic encapsulation layer.

In some embodiments, the display panel further includes a plurality of light concentrating structures at a side of the second planarization layer away from the light emitting device;

the light concentrating structures are in one-to-one correspondence with the sub-pixels.

In some embodiments, the light-filed display apparatus includes two display panels corresponding to a left eye and a right eye respectively, two imaging structures corresponding to the left eye and the right eye respectively, and two transmission lens structures corresponding to the left eye and the right eye respectively.

Embodiments of the present disclosure provide a wearable device, including the light-filed display apparatus according to embodiments of the present disclosure.

## Brief Description of Figures

In order to illustrate technical solutions in embodiments of the present disclosure more clearly, accompanying drawings that need to be used in describing embodiments will be introduced below briefly. Obviously the accompanying drawings described below are only some embodiments of the present disclosure, and other accompanying drawings can also be obtained by those ordinary skilled in the art according to these accompanying drawings without creative labor.

FIG. 1 is a schematic diagram of a related art in which the binocular focal depth and the monocular focal depth are not in the same plane;
FIG. 2 is a schematic structural diagram of a display device according to an embodiment of the present disclosure;
FIG. 3 is a schematic diagram of backward tracking of light entering a single eye from two viewpoints according to an embodiment of the present disclosure;
FIG. 4 is a schematic structural diagram of another display device according to an embodiment of the present disclosure;
FIG. 5 is a schematic structural diagram of a micro lens according to an embodiment of the present disclosure;

FIG. 6 is a schematic diagram of pixel arrangement in a display panel according to an embodiment of the present disclosure;

FIG. 7 is a schematic structural diagram of a display panel according to an embodiment of the present disclosure;

FIG. 8 is a schematic structural diagram of another display panel according to an embodiment of the present disclosure;

FIG. 9 is a schematic structural diagram of another display panel according to an embodiment of the present disclosure;

FIG. 10 is a schematic structural diagram of another display panel according to an embodiment of the present disclosure;

FIG. 11 is a schematic structural diagram of another display panel according to an embodiment of the present disclosure;

FIG. 12 is an imaging schematic diagram of a display device according to an embodiment of the present disclosure;

FIG. 13 is an imaging schematic diagram of another display device according to an embodiment of the present disclosure.

Reference numerals in the drawings include: display panel 1, pixel 2, imaging structure 3, first plane 4, transmission lens structure 5, human eye 6, first light emitting plane 7, first direction Z, micro lens 301, first substrate 302, first planarization layer 304, bonding frame 303, spherical lens 3011, first cylindrical lens 3012, second cylindrical lens 3013, sub-pixel unit 201, red sub-pixel unit R', blue sub-pixel unit B', green sub-pixel unit G', sub-pixel 2011, red sub-pixel R, blue sub-pixel B, green sub-pixel G, second direction X, third direction Y, light emitting device 20111, anode 201111, light emitting layer 201112, cathode 201113, second substrate 101, driving circuit layer 102, encapsulation layer 107, first inorganic encapsulation layer 1071, second inorganic encapsulation layer 1072, second planarization layer 108, thin film transistor TFT, active layer 1021, gate electrode G, source electrode S, drain electrode D, buffer layer 103, gate insulating layer 104, interlayer insulating layer 105, third planarization layer 106, pixel definition layer 109, first opening region 1091, color film 20112, red color film r, green color film g, blue color film b, first protection layer 111, light concentrating structure 116, fourth planarization layer 117, pixel electrode 20113, array substrate 112, opposite substrate 113, liquid crystal layer 114, black matrix 1131, common electrode 11 second protection layer 1122, third protection layer 1123, lens 501, first lens 5011, second lens 5012.

## Detailed Description

For making objectives, technical solutions and advantages of embodiments of the present disclosure clearer, technical solutions of embodiments of the present disclosure will be clearly and completely described below in conjunction with accompanying drawings in embodiments of the present disclosure. Apparently, embodiments described are some rather than all of embodiments of the present disclosure. Embodiments in the present disclosure and features of embodiments may be combined with each other without conflict. Based on embodiments of the present disclosure, all other embodiments obtained by those of ordinary skill in the art without making creative efforts fall within the scope of protection of the present disclosure.

Unless otherwise defined, technical or scientific terms used in the present disclosure should have ordinary meanings as understood by those of ordinary skill in the art to which the present disclosure belongs. The words "first", "second" and the like used in the present disclosure do not indicate any order, quantity or importance, but are only used to distinguish different components. "Including", "comprising", and other similar words used in the present disclosure indicate that elements or objects before the word include elements or objects after the word and their equivalents, without excluding other elements or objects. Similar words such as "connection" or "link" are not limited to physical or mechanical connections, but may include electrical connections, whether direct or indirect.

It should be noted that a size and a shape of each figure in the drawings do not reflect a true scale, but only for illustrating the present disclosure. Throughout the drawings, identical or similar reference numerals denote identical or similar elements or elements having identical or similar functions.

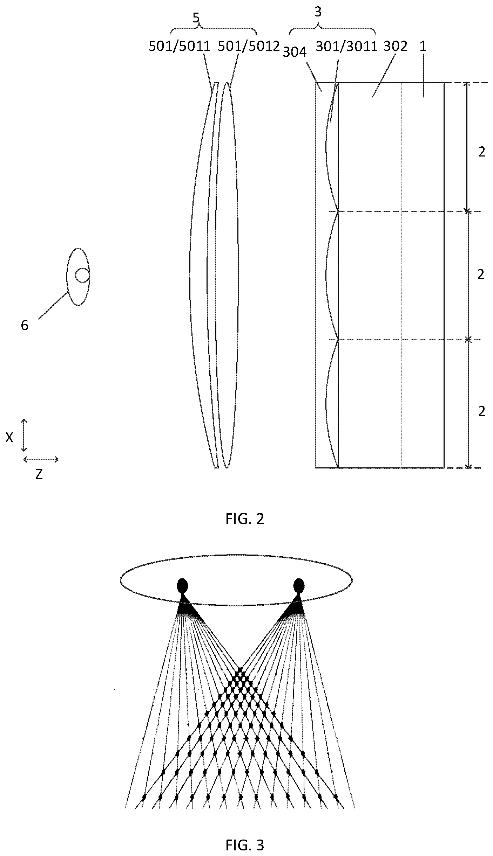

An embodiment of the present disclosure provides a light-filed display apparatus. As shown in FIG. 2, the light-filed display apparatus includes:

a display panel 1 including a plurality of pixels 2;
an imaging structure 3, located at a light emitting side of the display panel 1; the imaging structure is configured to image light emitted from the plurality of pixels 2, so that the light emitted from the display panel 1 forms a real image on a first plane 4; the first plane 4 is located at a side away from the display panel 1, of the imaging structure 3;
a transmission lens structure 5, located at a side away from the display panel 1, of the imaging structure 3; the transmission lens structure 5 is configured to amplify and image the real image to form a virtual image and enable a pupil of a human eye 6 to receive the virtual image; the virtual image received by a pupil of a single eye is formed by light emitted from at least two pixels 2.

It should be noted that when the light-filed display apparatus according to embodiments of the present disclosure is used for viewing, as shown in FIG. 2, the human eye 6 is at the side of away from the imaging structure 3, of the transmission lens structure 5. That is, the human eye 6, the transmission lens structure 5, the imaging structure 3 and the display panel 1 are sequentially arranged along the first direction Z.

It should be noted that the light-filed display apparatus according to embodiments of the present disclosure is a three-dimensional (3D) light-filed display apparatus based on light field display. The light field display can realize a true 3D scene like the real world. A light beam with a known direction is generally referred to as a field of light in space, or simply a light field. In the light field, the light beam entering the pupil of the eye needs an intersection point to image in space. A pixel represents a ray of light and corresponds to a viewpoint. In order to realize light field display, a pupil of a single eye needs to receive at least two viewpoints at the same time.

In the light-filed display apparatus according to embodiments of the present disclosure, the virtual image received by the pupil of the single eye is formed by light emitted from at least two pixels. That is, the pupil of the single eye receives at least two viewpoints at the same time, and the light emitted from the pixels is transmitted to the pupil position to form a view region. The transmission lens structure amplifies a real image to form an infinite virtual image, so that the monocular depth of field plane can be adjusted. The clear and fuzzy transformation of different depth of field planes can be realized through focusing of the human eye lens, so that the monocular focusing and the binocular convergence can be realized on the same plane, and the human eyes are prevented from perceiving the convergence conflict to cause visual fatigue. In addition, according to the present disclosure, the real image is formed on the first plane by the light emitted from the plurality of pixels through the imaging structure, and then an infinite virtual image is formed, so that the light spot size of pixel imaging is small, and the imaging quality is improved.

In a specific implementation, taking the pupil of a single eye receiving two viewpoints at the same time as an example, a schematic diagram of backward tracking of light entering the single eye from two viewpoints is shown in FIG. 3. Different viewpoints are incident to different positions of the pupil, and different viewpoints form intersection points in space, forming different depth of field surfaces. The single eye can focus on surfaces with different depth of field according to different convergence angles to avoid focus convergence conflict of two eyes. At the same time, different image rendering can be adjusted according to a focus state of human eyes, realizing switching of different depth of field.

Next, examples will be provided to illustrate the composition of the imaging structure, the display panel, and the transmission lens structure included in the display device according to embodiments of the present disclosure.

In some embodiments, as shown in FIG. 2, the imaging structure 3 includes a plurality of micro lenses 301 arranged in an array.

In some embodiments, focal lengths of the plurality of micro lenses are same.

In the light-filed display apparatus according to embodiments of the present disclosure, the focal lengths of the plurality of micro lenses are the same, the focal points of the plurality of micro lenses are located on the same plane. Therefore, the light emitted from the display panel can form a real image on the same plane, namely the first plane, and the design difficulty of the display device is reduced. In addition, compared with the condition of multifocal plane imaging in which the focal lengths of the micro lenses are not completely the same, the resolution of the display device can be prevented from being influenced.

In some embodiments, as shown in FIG. 2, the imaging structure 3 further includes:

a first substrate 302 located between the plurality of micro lenses 301 and the display panel 1;
a first planarization layer 304 located at a side away from the display panel 1, of the micro lens 301.

In a specific implementation, for example, the plurality of micro lenses may be formed on a side of the first substrate using an injection molding process. The material of the micro lens may be, for example, polyethylene glycol terephthalate (PET). The first substrate may be, for example, a glass substrate. Alternatively, the material of the first substrate may include polymethyl methacrylate (PMMA).

In a specific implementation, the first planarization layer is used for planarizing the plurality of micro lenses, and the material of the first planarization layer can be, for example, an organic material, which can be, for example, organic silicon (OCR).

In some embodiments, a difference between a refractive index of the micro lens and a refractive index of the first planarization layer is less than or equal to 0.2. That is, the difference between the refractive index of the micro lens and the refractive index of the first planarization layer is much smaller, so that large-angle refraction of light can be avoided.

In a specific implementation, for example, the refractive index of the micro lens is greater than or equal to 1.62 and less than or equal to 1.65. If the refractive index of the micro lens is 1.62, the refractive index of the first planarization layer is 1.42.

In some embodiments, as shown in FIG. 2, the first substrate 302 is bonded to the display panel 1.

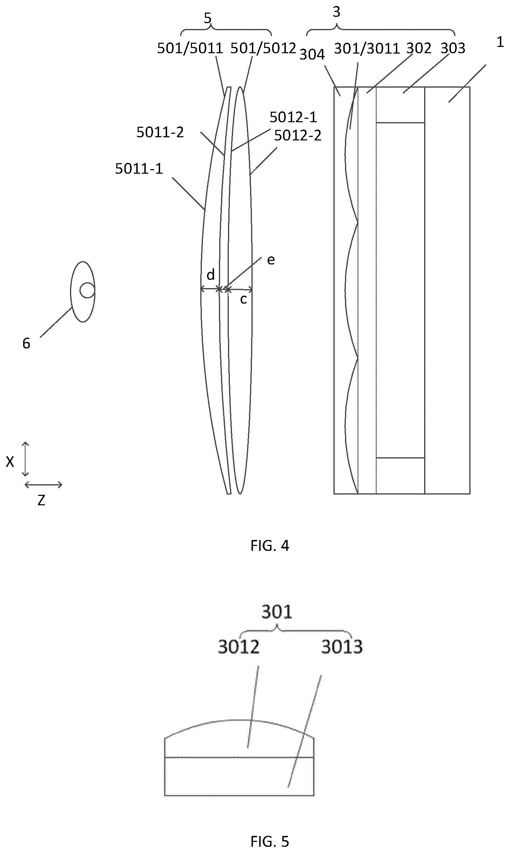

Alternatively, in some embodiments, as shown in FIG. 4, the imaging structure 3 further includes:
a bonding frame 303 located between the plurality of micro lenses 301 and the display panel 1 and bonded to the display panel 1.

That is, the imaging structure is frame bonded to the display panel through the bonding frame.

In a specific implementation, as shown in FIG. 4, the bonding frame 303 is located between the first substrate 302 and the display panel 1. The bonding frame 303 is bonded to the first substrate 302 and the display panel 1 at edges of the first substrate 302 and the display panel 1. A region A surrounded by the bonding frame 303 is filled with air between the first substrate 302 and the display panel 1.

In some embodiments, as shown in FIG. 2 and FIG. 4, the micro lens 301 is a spherical lens 3011;
a curved region of the spherical lens 3011 faces the transmission lens structure 5.

Therefore, the light emitted from the display panel is converged, so that the image formed on the first plane by the light emitted from the display panel after passing through the plurality of micro lenses is a real image.

Alternatively, in some embodiments, as shown in FIG. 5, the micro lens 301 includes a first cylindrical lens 3012 and a second cylindrical lens 3013 that are stacked. An extending direction of the first cylindrical lens 3012 and an extending direction of the second cylindrical lens 3013 intersect, so that the effect of the two stacked cylindrical lenses can be equivalent to that of a spherical lens. For example, the extending direction of the first cylindrical lens 3012 and the extending direction of the second cylindrical lens 3013 are perpendicular to each other.

A curved region of the first cylindrical lens 3012 and a curved region of the second cylindrical lens 3013 face the transmission lens structure (not shown).

Therefore, the light emitted from the display panel is converged, so that the image formed on the first plane by the light emitted from the display panel after passing through the plurality of micro lenses is a real image.

In a specific implementation, no matter the bonding frame is bonded to the display panel, or the first substrate is directly bonded to the display panel, optical adhesive can be used to bond the imaging structure to the display panel. Both the first substrate and the bonding frame are made of, for example, a light-transmitting material. The first substrate may be, for example, a glass substrate.

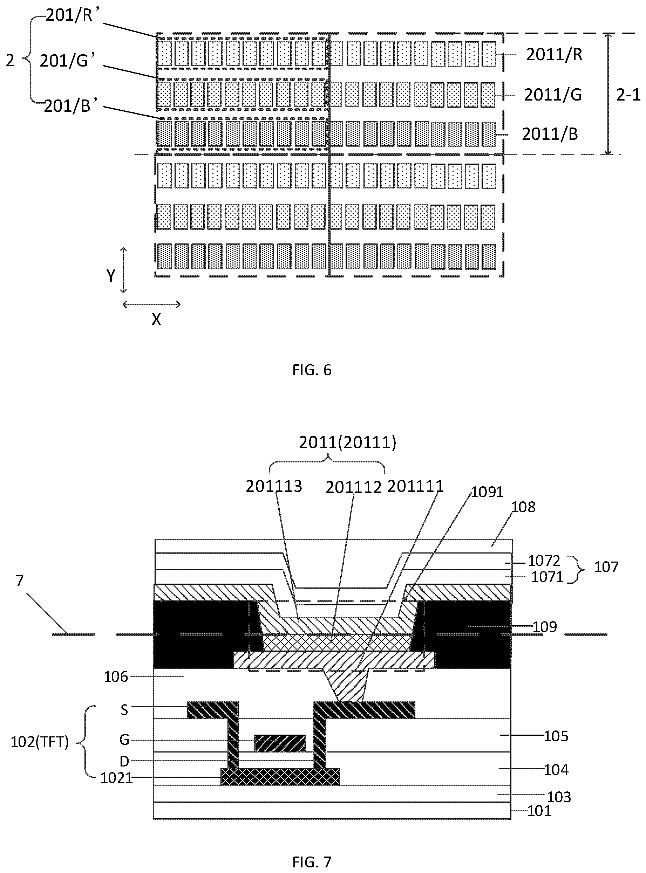

In some embodiments, as shown in FIG. 6, the pixel 2 includes a plurality of sub-pixel units 201.

In a specific implementation, as shown in FIG. 6, the pixel 2 includes, for example, three sub-pixel units 201. The three sub-pixel units 201 are, for example, a red sub-pixel unit R', a blue sub-pixel unit B' and a green sub-pixel unit G', respectively.

In a specific implementation, as shown in FIG. 6, pixels 2 are arrayed along the second direction X and the third direction Y. For example, the three sub-pixel units 201 are sequentially arranged along the third direction Y, for example.

In some embodiments, as shown in FIG. 6, the sub-pixel unit 201 includes a plurality of sub-pixels 2011 with the same color.

In a specific implementation, as shown in FIG. 6, the plurality of sub-pixels 2011 included in the sub-pixel unit 201 are sequentially arranged along the second direction X, for example. In a specific implementation, the red sub-pixel unit R' includes a plurality of red sub-pixels R arranged along the second direction X, the blue sub-pixel unit B' includes a plurality of blue sub-pixels B arranged along the second direction X, the green sub-pixel unit G' includes a plurality of green sub-pixels G arranged along the second direction X.

In a specific implementation, as shown in FIG. 6, in the second direction X, the color of one row of sub-pixels 2011 is the same. In the light-filed display apparatus according to embodiments of the present disclosure, the display panel includes a plurality of pixel groups. Each pixel group includes a plurality of sub-pixel units with different colors, each sub-pixel unit includes a plurality of sub-pixels with the same color, and in the second direction X, the space between two adjacent sub-pixels is small, so that each row of sub-pixels can form a continuous light emitting surface.

In some embodiments, the display panel is an electroluminescent display panel.

In some embodiments, when the display panel is an electroluminescent display panel, as shown in FIG. 7, the sub-pixel 2011 includes a light emitting device 20111.

In a specific implementation, the light emitting device may be, for example, an organic light emitting diode (OLED), a quantum dot light emitting diode (QLED), a micro inorganic light emitting diode (micro LED) or a mini light emitting diode (mini LED). That is, the electroluminescent display panel may be, for example, an organic light emitting diode (OLED) display panel, a quantum dot light emitting diode (QLED) display panel, a micro inorganic light emitting diode (micro LED) display panel, or a mini light emitting diode (mini LED) display panel.

In a specific implementation, as shown in FIG. 7, the light emitting device 20111 includes an anode 201111, a light emitting layer 201112, and a cathode 201113 that are stacked.

In a specific implementation, a hole injection layer, a hole transport layer and the like may be included between the anode and the light emitting layer, and an electron injection layer, an electron transport layer and the like may also be included between that cathode and the light emitting layer.

In some embodiments, as shown in FIG. 7, the display panel 1 further includes:

a second substrate 101;

a driving circuit layer 102 located between the second substrate 101 and the light emitting device 20111;

an encapsulation layer 107 located at a side facing the imaging structure (not shown), of the light emitting device 20111, that is, located at a side of away from the second substrate base plate 101, the light emitting device 20111, including a first inorganic encapsulation layer 1071 and a second inorganic encapsulation layer 1072 sequentially stacked at the side facing the imaging structure, of the light emitting device 20111 (i.e., the side away from the second substrate 101, of the light emitting device 20111);

a second planarization layer 108 located at a side away from the first inorganic encapsulation layer 1071, of the second inorganic encapsulation layer 1072.

In a specific implementation, the encapsulation layer is used for protecting the light emitting device and preventing water and oxygen from eroding the light emitting layer of the light emitting device. The material of the first inorganic encapsulation layer is, for example, silicon nitride, and the material of the second inorganic encapsulation layer is, for example, alumina.

In a specific implementation, taking the OLED display panel as an example, as shown in FIG. 7, the driving circuit layer 102 includes, for example, a thin film transistor (TFT), and may further include a capacitor (not shown). The thin film transistor (TFT) includes an active layer 1021, a gate G, a source S, and a drain D. In a specific implementation, the thin film transistor included in the driving circuit layer at least includes a driving transistor. The drain D of the driving transistor is electrically connected to the anode 201111 of the light emitting device 20111. The material of the active layer may include, for example, silicon, an oxide semiconductor, or the like. The gate, source, and drain include, for example, a metal material.

In a specific implementation, as shown in FIG. 7, the thin film transistor (TFT) is a top gate structure, that is, the gate G is located at a side away from the second substrate 101, of the active layer 1021. The display panel 1 further includes a buffer layer 103 located between the second substrate 101 and the active layer 1021, a gate insulating layer 104 located between the active layer 1021 and the gate G, an interlayer insulating layer 105 located between the gate G and the source S and the drain D, and a third planarization layer 106 located between the source S and the drain D and the anode 201111.

In a specific implementation, taking the OLED display panel as an example, as shown in FIG. 7, the display panel further includes a pixel definition layer 109 at a side away from the second substrate 101, of the third planarization layer 106. The pixel definition layer 109 has a first opening region 1091, and the pixel definition layer 109 covers an edge of the anode 201111. An orthographic projection of the first opening region 1091 on the second substrate 101 falls within the anode 201111. The anode 201111, the light emitting layer 201112, the cathode 201113 and the first opening region 1091 are stacked to form a light emitting device.

In some embodiments, in one pixel, light emitting colors of the light emitting devices corresponding to sub-pixels of different sub-pixel units are different. The light emitting color of the light emitting device corresponds to the light emitting color of the sub-pixel where the light emitting device is located. The light emitting device included in the red sub-pixel emits red light, the light emitting device included in the blue sub-pixel emits blue light, and the light emitting device included in the green sub-pixel emits green light.

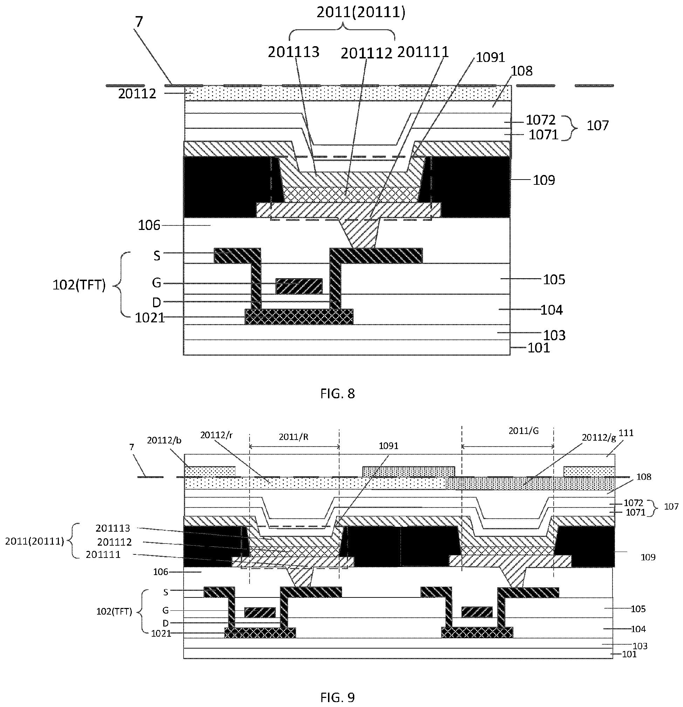

Alternatively, in some embodiments, as shown in FIG. 8, the sub-pixel 2011 further includes a color film 20112.

In a specific implementation, for the electroluminescent display panel, the color film is located at a side away from the second substrate, of the light emitting device. As shown in FIG. 8, when the display panel includes the encapsulation layer 107, the color film 20112 is located at a side away from the light emitting device 20111, of the encapsulation layer 107.

In a specific implementation, sub-pixels of different sub-pixel units correspond to color films of different colors. The light emitting color of the color film corresponds to the light emitting color of the sub-pixel where the color film is located. The red sub-pixel includes a red color film, the blue sub-pixel includes a blue color film, and the green sub-pixel includes a green color film.

In a specific implementation, the colors of the light emitting devices included in the sub-pixels in the display panel are the same. Color conversion is realized through the color film to carry out full-color display. For example, each sub-pixel in the display panel includes a light emitting device that emits white light. Alternatively, the light emitting device included in each sub-pixel in the display panel may emit blue light.

Of course, in a specific implementation, the light emitting colors of the light emitting devices corresponding to the sub-pixels of different sub-pixel units may be different, and color purity is improved through the color film. In each sub-pixel, the light emitting color of the light emitting device is the same as the light emitting color of the color film.

In some embodiments, as shown in FIG. 9, the color film 20112 extends to a region between adjacent sub-pixels 2011. Color films 20112 included in two adjacent sub-pixels 2011 belonging to different sub-pixel units 201 are stacked in a region between the two adjacent sub-pixels 2011.

It should be noted that only the red sub-pixel R and the green sub-pixel G are shown in FIG. 9. The red color film r included in the red sub-pixel R and the green color film g included in the green sub-pixel G overlap in a region between the red sub-pixel R and the green sub-pixel G. The red color film r included in the red sub-pixel R and the blue color film b included in the blue sub-pixel (not shown) overlap in a region between the red sub-pixel R and the blue sub-pixel (not shown). The green color film g included in the green sub-pixel G and the blue color film b included in the blue sub-pixel (not shown) overlap in a region between the green sub-pixel G and the blue sub-pixel (not shown).

In the display device according to embodiments of the present disclosure, color films included in two adjacent sub-pixels belonging to different sub-pixel units are stacked in a region between the two adjacent sub-pixels. The two stacked color films can block the light emitted from the sub-pixel region, so that interference between adjacent sub-pixel units can be avoided without arranging a black matrix. Decrease of the sub-pixel aperture ratio cause by the arrangement of the black matrix can be avoided. And it is beneficial for improving the display effect.

In some embodiments, as shown in FIG. 9, the display panel further includes a first protection layer 111 covering the color film 20112.

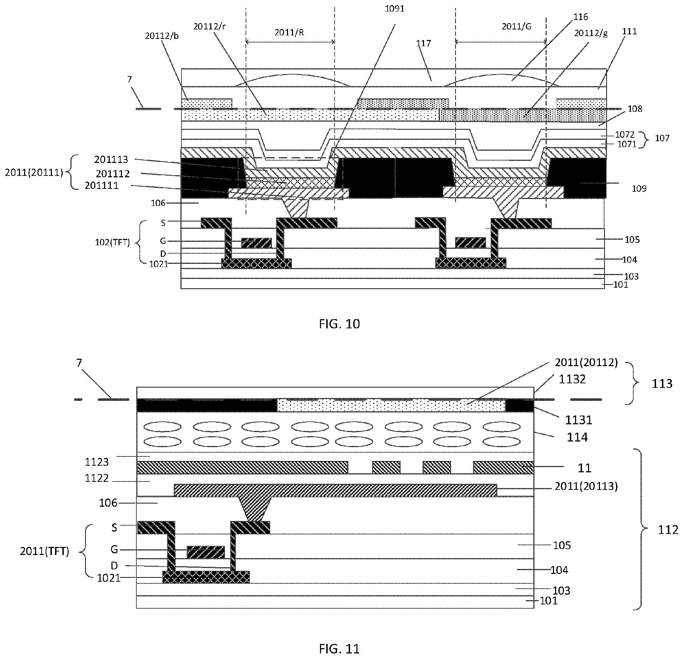

In some embodiments, as shown in FIG. 10, the display panel 1 further includes a plurality of light concentrating structures 116 at a side away from the light emitting device 20111, of the second planarization layer 108;

the light concentrating structures 116 are in one-to-one correspondence with the sub-pixels 2011.

In a specific implementation, an orthographic projection of the light concentrating structure on the first substrate covers an orthographic projection of a light emitting region of the sub-pixel on the first substrate.

It should be noted that FIG. 10 takes a display panel including a color film 20112 as an example for illustration. The light concentrating structure 116 is located at a side away from the color film 20112, of the first protection layer 111. If the display panel does not include the color film, the light concentrating structure 116 is disposed at a side away from the light emitting device 20111, of the second planarization layer 108. In some embodiments, as shown in FIG. 10, the display panel further includes a fourth planarization layer 117 located at a side away from the second planarization layer 108, of the light concentrating structure 116.

In the display device according to embodiments of the present disclosure, the display panel includes the light concentrating structure, so that the light emitted from the light emitting device can be gathered, and the improvement of the light utilization rate is facilitated.

In a specific implementation, the light concentrating structure is a micro lens. The micro lens is, for example, a spherical lens, and a curved surface of the spherical lens is far away from the first substrate, so that the light can be converged.

Alternatively, in some embodiments, the display panel may be a liquid crystal display panel (LCD).

In some embodiments, as shown in FIG. 11, the sub-pixel 2011 includes:

a color film 20112; a light emitting color of the color film 20112 corresponds to a color of the sub-pixel 2011;
a thin film transistor (TFT) located at a side away from the micro lens (not shown), of the color film 20112;
a pixel electrode 20113 located between the thin film transistor (TFT) and the color film 20112.

In a specific implementation, when the display panel is a liquid crystal display panel, as shown in FIG. 11, the display panel includes: an array substrate 112 and an opposite substrate 113 that are oppositely arranged, and a liquid crystal layer 114 between the array substrate 112 and the opposite substrate 113. The array substrate 112 includes a thin-film transistor (TFT) and a pixel electrode 20113, and the opposite substrate 113 includes a color film 20112. The array substrate 112 further includes a second substrate 101. The thin film transistor (TFT) located between the second substrate 101 and the pixel electrode 20113. The opposite substrate 113 further includes a third substrate 1132, a black matrix 1131 located at a side facing the liquid crystal layer 114, of the third substrate 1132. The black matrix 1131 includes a second opening corresponding to an opening region of the sub-pixel 2011. The color film 20112 includes a portion located in the second opening. FIG. 11 takes a common electrode 5 located on the array substrate 112 as an example for illustration. Of course, the common electrode 11 may be located on the opposite substrate 113.

In a specific implementation, as shown in FIG. 11, the thin film transistor (TFT) is a top gate structure. That is, the gate G is located at a side away from the second substrate 101, of the active layer 1021. The array substrate 112 further includes a buffer layer 103 located between the second substrate 101 and the active layer 1021, a gate insulating layer 104 located between the active layer 1021 and the gate G, an interlayer insulating layer 105 located between the gate G and the source S and the drain D, a third planarization layer 106 located between the source S and the drain D and the pixel electrode 20113, a second protection layer 1122 located between the pixel electrode 20113 and the common electrode 11, and a third protection layer 1123 located between the common electrode 11 and the liquid crystal layer 114.

In some embodiments, when the display panel is a liquid crystal display panel, the display device further includes a backlight module located at a side away from the imaging structure, of the display panel. The backlight module includes a backlight source, such as an electroluminescent device.

In some embodiments, as shown in FIG. 2 and FIG. 4, the transmission lens structure 5 includes a plurality of lenses 501. The plurality of lenses 501 include at least one of a straight-through lens, a free-form surface lens, or a Fresnel lens.

It should be noted that in FIG. 2 and FIG. 4, the transmission lens structure 5 including two lenses 501 are taken as an example for distance illustration. The two lenses 501 are a first lens 5011 and a second lens 5012 respectively, and the second lens 5012 is located between the first lens 5011 and the imaging structure 3.

In a specific implementation, the first lens may be made of, for example, EP8000 material with a refractive index of 1.661 and an Abbe number of 20.53. The second lens may be made of, for example, K26R material with a refractive index of 1.535 and an Abbe number of 55.634. Parameters of the lens 501 in FIG. 4 are shown in Table 1, where r1 is a radius of curvature of a first surface 5011-1 of the first lens 5011, r2 is a radius of curvature of a second surface 5011-2 of the first lens 5011, r3 is a radius of curvature of a first surface 5012-1 of the second lens 5012, r4 is a radius of curvature of a second surface 5012-2 of the second lens 5012.

Table 1

|  | Size/mm | Conic coefficient (conic coefficient) | | | |
|---|---|---|---|---|---|
| r1 | 10.538 | -1.7E-04 | -2.4E-06 | -4.5E-08 | 8.4E-11 |
| r2 | 4.572 | -2.2E-04 | 3.0E-06 | -4.53E-08 | 8.9E-11 |
| r3 | 6.935 | -8.0E-05 | -9.6E-07 | 2.3E-08 | -1.6E-10 |
| r3 | -11.064 | -2.5E-04 | 2.4E-06 | -3.5E-08 | 2.7E-10 |
| d | 5.21 | - | - | - | - |
| e | 1.62 | - | - | - | - |
| c | 5.02 | - | - | - | - |

Of course, in a specific implementation, the transmission lens structure may also include more lenses.

Alternatively, in some embodiments, the transmission lens structure includes a folded light path (Pancake) structure. It should be noted that, for example, the Pancake includes a semi-transparent and semi-reflective mirror, a 1/4 phase delay sheet, and a reflective polarizer. The optical design of Pancake is based on the principle of polarized light, by utilizing the characteristic of selective reflection and projection of the reflective polarizer to different polarized light and cooperating with the 1/4 phase delay sheet to adjust the form of the polarized light, the light is reflected back and forth between the semi-transparent and semi-reflective mirror and the reflective polarizer, and is finally transmitted out from the reflective polarizer. Circularly polarized light becomes linearly polarized light after passing through the 1/4 phase delay sheet, the linearly polarized light reaches the reflective polarizer and is reflected, and then the linearly polarized light is changed back to the circularly polarized light after passing through the 1/4 phase delay sheet for the second time, the circularly polarized light is reflected by the semi-transparent and semi-reflective and passes through the 1/4 phase delay sheet for the third time, and is changed to linearly polarized light again. Because this time the light is rotated 90 degrees compared with the first light, so that the light can be imaged through the reflective polarizer.

Alternatively, in a specific implementation, the transmission lens structure may also include a combination of a lens and a Pancake.

In a specific implementation, the display device further includes an assembly frame for mechanically assembling the transmission lens structure with the imaging structure, so that the distance between the imaging structure and the transmission lens structure satisfies a requirement.

It should be noted that the display device needs to store a preset light field mapping rule matched with parameters of the display device, so that a display image of a display panel corresponding to a 3D image to be displayed can be obtained. For example, in a specific implementation, according to coordinate information of the transmission lens structure and the imaging structure and coordinate information of pixels of the display panel, a light field database is established to obtain light field information matched with the display device. One ray of light corresponds to one viewpoint. When determining the display image of the display panel corresponding to the 3D image to be displayed, in combination with light field information database, a depth of field plane to be displayed is intersected with the light field of the space. Pixels on the display panel are determined according to the mapping relationship, to obtain a light field rendering image of the depth of field plane. Light field images of depth of field planes obtained by rendering are superposed together, and corresponding display information is provided to drive the pixels to emit light. In this way, through the imaging structure, the transmission lens structure, the same 3D scene as the real world, which can be viewed by human eyes with adjustable focus, can be restored.

Next, conditions required to be satisfied among an imaging structure, a transmission lens structure and a display panel included in a display device and related parameters of the structures are illustrated.

In a specific implementation, the position of the first plane may be selected according to the imaging quality and the size of the display device, for example.

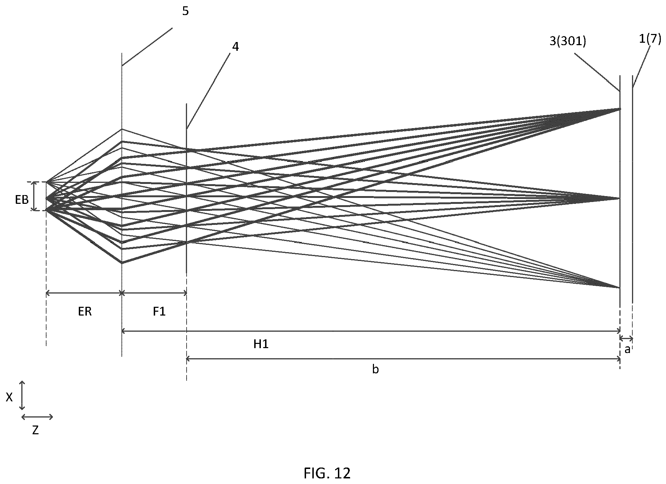

In some embodiments, as shown in FIG. 12, the focal point of the transmission lens structure 5 is located on the first plane 4. That is, the distance between the transmission lens structure 5 and the first plane 4 is the focal length F1 of the transmission lens. structure 5.

In the display device according to embodiments of the present disclosure, the focal point of the transmission lens structure is located on the first plane. In this way, the transmission lens structure amplifies the real image formed by the first plane to form a virtual image with good imaging effect, which is beneficial for improving the imaging quality and further improving the display effect.

It should be noted that in FIG. 12, the transmission lens structure 5, the imaging structure 3, and the first light emitting plane 7 are replaced by line segments. It should be noted that, the first light emitting plane is a surface farthest from the imaging structure and includes different light emitting colors of a plurality of sub-pixel units included in the pixel.

In a specific implementation, when the display panel includes a color film, the plane where the surface of the color film facing the imaging structure is located is the first light emitting plane. In a specific implementation, when the display panel includes the light emitting device and does not include the color film, the first light emitting plane is the plane where the light emitting surface of the light emitting layer is located.

In some embodiments, when the focal point of the transmission lens structure is located on the first plane, the pixels are in one-to-one correspondence with the micro lenses.

In a specific implementation, the pixels are in one-to-one correspondence with the micro lenses, and a single micro lens is responsible for the whole picture of a single viewpoint. In the eye movement distance direction, all pixels on the display panel are designed to be projected within the eye movement distance.

In some embodiments, in any eye movement distance direction, the plurality of pixels is divided into a plurality of pixel rows; the pixel row includes v pixels arranged along the eye movement distance, where v is an integer greater than or equal to 2.

It should be noted that the eye movement distance direction is the second direction or the third direction. Taking the eye movement distance direction being the second direction X as an example, as shown in FIG. 6, the plurality of pixels 2 are divided into a plurality of pixel rows 2-1; the pixel row 2-1 includes v pixels 2 arranged in the second direction X, v being an integer greater than or equal to 2, so that the pupil of the single eye receives at least 2 viewpoints. Only two pixels 2 in one pixel row 2-1 are shown in FIG. 6. The plurality of pixel rows 2-1 extend in the second direction X and are arranged in the third direction Y.

In some embodiments, v is less than or equal to 30.

Further, in order to realize multi-viewpoint display to improve the display effect, v may be selected to be greater than or equal to 4 and less than or equal to 30.

Since the micro lenses are in one-to-one correspondence with the pixels, in some embodiments, the aperture SS of the micro lenses satisfies:

SS = P1/v, where P1 is a width of the display panel in any eye movement distance direction.

It should be noted that widths of the eye movement distances in the second direction and the third direction are generally the same. Widths of the display panel in the second direction and the third direction are the same, widths of the pixels in the second direction and the third direction are the same, widths of apertures of the transmission lens structure in the second direction and the third direction are the same, and widths of apertures of the micro lenses in the second direction and the third direction are the same. In FIG. 12, the eye movement distance in the second direction X is described as an example. For example, P1 is the width of the display panel 1 in the second direction X.

In some embodiments, if P1 = 0.9 inch = 16.128 mm, v is greater than or equal to 4 and less than or equal to 30, then SS is greater than or equal to 4.032 mm and less than or equal to 0.5376 mm.

In some embodiments, as shown in FIG. 12, a distance H1 between the transmission lens structure 5 and the imaging structure 3 satisfies:

$$P1/H1=EB/ER;$$

where EB is an eye movement distance, and ER is a distance from the human eye to the transmission lens structure 5.

In some embodiments, if P1 = 0.9 inch = 16.128 mm, EB is greater than or equal to 4 mm and less than or equal to 6 mm, ER is greater than or equal to 15mm and less than or equal to 25 mm, and H1 is greater than or equal to 50 mm and less than or equal to 84 mm.

In a specific implementation, the aperture D1 of the transmission lens structure may be designed according to the required field of view fov2 for entering the eye. The aperture D1 of the transmission lens structure includes widths of the transmission lens structure in the second direction and the third direction Y. For a display panel of 0.9 inches and 3840 resolution, the fov2 to be achieved for 1 arcminute resolution at 3840 resolution is 42 °. If EB = 5 mm, ER = 25 mm, for example D1 is greater than or equal to 27.85 mm and less than or equal to 50 mm.

In a specific implementation, if EB = 5 mm, ER = 25 mm, for a display panel of 0.9 inches, H1 = 80.64 mm.

In some embodiments, as shown in FIG. 12, a distance a between the micro lens 301 and the first light emitting plane 7 included in the display panel 1 satisfies:

$$\tan fov1 = \frac{D1}{H1} = \frac{SS}{a};$$

where fov1 is a field of view of the micro lens 301.

In some embodiments, if P1 = 0.9 inch = 16.128 mm, D1 is greater than or equal to 27.85 mm and less than or equal to 50 mm, H1 is greater than or equal to 50 mm and less than or equal to 84 mm, SS is greater than or equal to 4.032 mm and less than or equal to 0.5376 mm, then a is greater than or equal to 10.2 mm and less than or equal to 4.41 mm.

In some embodiments, a focal length F1 of the transmission lens structure 5 satisfies:

$$\frac{1}{ER} + \frac{1}{H1} = \frac{1}{F1}.$$

In a specific implementation, for a display panel of 0.9 inches, if v = 4, then a = 10.2 mm, H1 = 80.64 mm, then F1 = 18.451.

In some embodiments, as shown in FIG. 12, a distance b between the first plane 4 and the micro lens 301 satisfies B = H1-a-F1.

In a specific implementation, for a display panel of 0.9 inches, if v = 4, then a = 10.2 mm, H1 = 80.64 mm, F1 = 18.451, then b = 51.99 mm.

In a specific implementation, a is an object distance of imaging of the micro lens, b is an image distance of imaging of the micro lens, a, b, and a focal length F2 of the micro lens satisfy an imaging relationship of $\frac{1}{a} + \frac{1}{b} = \frac{1}{F2}$, so F2 = 8.53 mm.

In some embodiments, if the refractive index of the micro lens is greater than or equal to 1.62 and less than or equal to 1.65, the refractive index of the first planarization layer is 1.42. In order to meet the parameter requirements such as the focal length of the micro lens, for example, the radius of curvature of the micro lens is 1.705. In a specific implementation, the micro lens needs to meet the requirements of the angle for entering the eye and has a certain shrinkage rate, and the aperture of the micro lens is 3.371 mm, the arch height of the micro lens is 1.446 mm.

Of course, in a specific implementation, the first plane may also be located at other positions.

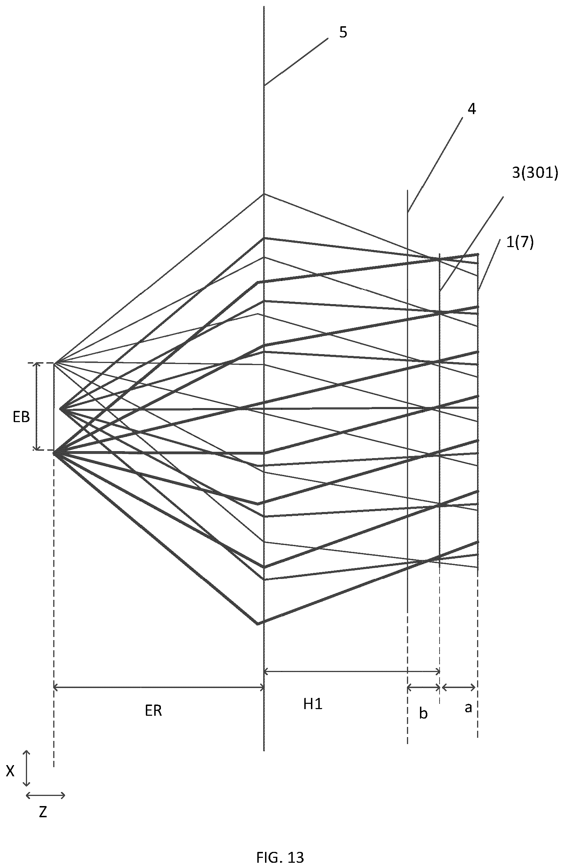

In some embodiments, as shown in FIG. 13, the distance H1 between the array of micro lenses 301 and the transmission lens structure 5 is less than or equal to the focal length of the transmission lens structure 5.

In the display device according to embodiments of the present disclosure, the distance between the array of micro lenses and the transmission lens structure is less than or equal to the focal length of the transmission lens structure, the distance between the array of micro lenses and the transmission lens structure can be reduced under the condition of ensuring certain imaging quality, reducing the volume of the display device.

It should be noted that, in FIG. 13, the transmission lens structure 5, the imaging structure 3, and the first light emitting plane 7 are also replaced by line segments. It should be noted that, the first light emitting plane is a surface farthest from the imaging structure and has different light emitting colors of a plurality of sub-pixel units included in the pixel.

In a specific implementation, when the display panel includes a color film, the plane of the surface of the color film facing the imaging structure is the first light emitting plane. In a specific implementation, when the display panel includes the light emitting device and does not include the color film, the first light emitting plane is the plane where the light emitting surface of the light emitting layer is located.

In some embodiments, the display panel includes a plurality of pixel groups, and the pixel group includes v pixels, v being an integer greater than 2. The pixel groups are in one-to-one correspondence with the micro lenses. That is, one micro lens corresponds to a plurality of pixels.

In a specific implementation, one micro lens corresponds to a plurality of pixels, and different micro lenses are responsible for the whole picture of a single viewpoint. That is, the resolution at a single viewpoint is equal to the number of micro lenses.

In some embodiments, v is less than or equal to 30.

Further, in order to realize multi-viewpoint display to improve the display effect, v may be selected to be greater than or equal to 4 and less than or equal to 30.

Since one micro lens corresponds to a plurality of pixels, in some embodiments, the aperture SS of the micro lens satisfies:

SS = v × P2, where P2 is a pixel size.

It should be noted that the pixel size is a width of a pixel in the second direction or the third direction. The width of the pixel in the second direction is equal to the width of the pixel in the third direction.

In a specific implementation, the focal length of the transmission lens structure can be designed according to the required field of view of the transmission lens structure for entering the eye.

In some embodiments, the focal length F1 of the transmission lens structure satisfies: $\tan \frac{fov2}{2} = \frac{P1/2}{F1}$; where P1 is the width in any eye movement distance direction, and fov2 is the field of view of the transmission lens structure 5.

In a specific implementation, for a display panel of 0.9 inches, a focal length of an eyepiece is F1 = 20.8 mm to achieve a fov2 of 42° for entering the eye.

In a specific implementation, the aperture D1 of the transmission lens structure may be designed according to the required field of view fov2 for entering the eye. The aperture D1 of the transmission lens structure includes widths of the transmission lens structure in the second direction and the third direction Y. For a display panel of 0.9 inches and 3840 resolution, the fov2 to be achieved for 1 arcminute resolution at 3840 resolution is 42 °. If EB = 5 mm, ER = 25 mm, for example D1 is greater than or equal to 27.85 mm and less than or equal to 50 mm.

In some embodiments, a distance b between the first plane and the micro lens satisfies:

$$\frac{1}{-L1} + \frac{1}{F1-b} = \frac{1}{F1};$$

where L1 is a distance between an optimal depth of field plane and the transmission lens structure.

In a specific implementation, considering the range of the comfortable depth of field plane fused by human eyes, the optimal imaging depth of field plane L1 is 1000 mm, when F1 = 20.8mm, b = 0.42mm.

In a specific implementation, pixels corresponding to a single micro lens should cover the eye movement distance EB.

In some embodiments, the distance a between the first light emitting plane and the micro lens 301 satisfies:

$\tan fov1 = \frac{EB}{F1} = \frac{SS}{a}$ ;

where EB is the eye movement distance, H1 is the distance between the transmission lens structure and the imaging structure, SS is the aperture of the micro lens, fov1 is the field of view of the micro lens 301.

In some embodiments, the distance H1 between the micro lens and the transmission lens structure is equal to the focal length F1 of the transmission lens structure, the distance between the first light emitting plane and the micro lens is larger than the focal length of the micro lens;

the distance a between the first light emitting plane and the micro lens 301 satisfies $\tan fov1 = \frac{EB}{F1} = \frac{SS}{a}$.

In a specific implementation, taking one micro lens corresponding to four pixels as an example, for a display panel of 0.9 inches with a resolution of 3840 × 3840, the pixel size P2 is 4.2 microns × 4.2 microns, the pixel opening is 30%, and correspondingly, SS = 0.016 mm. When EB = 5mm and F1 = 20.8mm, then a = 0.07 mm.

In a specific implementation, a is the object distance of imaging of the micro lens imaging, b is the image distance of imaging of the micro lens, a, b, and the focal length F2 of the micro lens satisfy the imaging relationship of $\frac{1}{a} + \frac{1}{b} = \frac{1}{F2}$, so F2 = 0.06 mm.

In some embodiments, the distance between the micro lens and the transmission lens structure is less than the focal length of the transmission lens structure, the distance between the first light emitting plane and the micro lens is greater than the focal length of the micro lens.

In some embodiments, a light-filed display apparatus includes two display panels corresponding to a left eye and a right eye respectively, two imaging structures corresponding to the left eye and the right eye respectively, and two transmission lens structures corresponding to the left eye and the right eye respectively.

In a specific implementation, the two display panels display the same picture.

In a specific implementation, the two display panels have the same composition, size and other parameters, the two imaging structures have the same composition, size and other parameters, and the two transmission lens structures have the same composition, size and other parameters. The position relationship between the display panel, the imaging structure and the transmission lens structure corresponding to the left eye, and the position relationship between the display panel, the imaging structure and the transmission lens structure corresponding to the right eye are the same.

A wearable device according to embodiments of the present disclosure includes the light-filed display apparatus according to embodiments of the present disclosure.

In a specific implementation, the transmission lens structure acts, for example, as an eyepiece of a wearable device.

The wearable device according to embodiments of the present disclosure is any wearable product or component with a display function, such as a wearable helmet, wearable glasses, etc. Other essential components of the wearable device are understood by those ordinary skilled in the art, which is not intended to be exhaustive or to be limiting of the present disclosure. For the implementation of the wearable device, reference may be made to the above embodiments of the light-filed display apparatus, and the repetition is omitted.

To sum up, in the light-filed display apparatus according to embodiments of the present disclosure, the virtual image received by the pupil of the single eye is formed by light emitted from at least two pixels. That is, the pupil of the single eye receives at least two viewpoints at the same time, and the light emitted from the pixels is transmitted to the pupil position to form a view region. The transmission lens structure amplifies a real image to form an infinite virtual image, so that the monocular depth of field plane can be adjusted. The clear and fuzzy transformation of different depth of field planes can be realized through focusing of the human eye lens, so that the monocular focusing and the binocular convergence can be realized on the same plane, and the human eyes are prevented from perceiving the convergence conflict to cause visual fatigue. In addition, according to the present disclosure, the real image is formed on the first plane by the light emitted from the plurality of pixels through the imaging structure, and then an infinite virtual image is formed, so that the light spot size of pixel imaging is small, and the imaging quality is improved.

Although embodiments of the present disclosure have been described, those skilled in the art may otherwise make various modifications and variations to these embodiments once they are aware of the basic inventive concept. Therefore, the appended claims intend to include embodiments as well as all these modifications and variations falling within the scope of the present disclosure.

Apparently, those skilled in the art can make various modifications and variations to embodiments of the present disclosure without departing from the spirit and scope of embodiments of the present disclosure. In this way, if the modifications and variations of embodiments of the present disclosure fall within the scope of the claims of the present disclosure and their equivalent technologies, the present disclosure is also intended to include these modifications and variations.

**Claims**

1. A light-filed display apparatus, comprising:

   a display panel, comprising a plurality of pixels;
   an imaging structure located at a light emitting side of the display panel; wherein the imaging structure is configured to image light emitted from the display panel, so that the light emitted from the display panel forms a real image on a first plane; the first plane is located at a side away from the display panel, of the imaging structure;
   a transmission lens structure located at a side away from the display panel, of the imaging structure; wherein the transmission lens structure is configured to: amplify the real image to form a virtual image and enable a pupil of a human eye to receive the virtual image; the virtual image received by a pupil of a single eye is formed by light emitted from at least two pixels.

2. The light-filed display apparatus according to claim 1, wherein the imaging structure comprises a plurality of micro lenses arranged in an array;
   focal lengths of the plurality of micro lenses are same.

3. The light-filed display apparatus according to claim 2, wherein a focal point of the transmission lens structure is located on the first plane.

4. The light-filed display apparatus according to claim 3, wherein the display panel comprises a plurality of pixels; the pixels are in one-to-one correspondence with the micro lenses.

5. The light-filed display apparatus according to claim 4, wherein a distance H1 between the transmission lens structure and the imaging structure satisfies:

$$P1/H1=EB/ER;$$

   wherein EB is an eye movement distance, ER is a distance from the human eye to the transmission lens structure, and P1 is a width of the display panel in any eye movement distance direction.

6. The light-filed display apparatus according to claim 5, wherein the pixel comprises a plurality of sub-pixel units; the display panel comprises a first light emitting plane; light emitting colors of the plurality of sub-pixel units on the first light emitting plane are different;

   a distance a between the micro lens and the first light emitting plane satisfies:

$$\tan fov1 = \frac{D1}{H1} = \frac{SS}{a};$$

wherein SS is an aperture of the micro lens, D1 is an aperture of the transmission lens structure, and fov1 is a field of view of the micro lens.

7. The light-filed display apparatus according to claim 6, wherein in the any eye movement distance direction, the plurality of pixels are divided into a plurality of pixel rows; the pixel row comprises v pixels arranged along the eye movement distance direction, wherein v is an integer greater than 2; the aperture SS of the micro lens satisfies:

$$SS=P1/v.$$

8. The light-filed display apparatus according to claim 7, wherein v is less than or equal to 30.

9. The light-filed display apparatus according to any one of claims 6 to 8, wherein a focal length F1 of the transmission lens structure satisfies:

$$\frac{1}{ER} + \frac{1}{H1} = \frac{1}{F1}.$$

10. The light-filed display apparatus according to claim 9, wherein a distance b between the first plane and the micro lens satisfies B = H1-a-F1.

11. The light-filed display apparatus according to claim 2, wherein a distance between the plurality of micro lenses and the transmission lens structure is less than or equal to a focal length of the transmission lens structure.

12. The light-filed display apparatus of claim 11, wherein the display panel comprises a plurality of pixel groups; the pixel group comprises v pixels, wherein v is an integer larger than 2; the pixel group is in one-to-one correspondence with the micro lens.

13. The light-filed display apparatus according to claim 12, wherein the pixel comprises a plurality of sub-pixel units; the display panel comprises a first light emitting plane; light emitting colors of the plurality of sub-pixel units on the first light emitting plane are different;

a distance a between the micro lens and the first light emitting plane satisfies:

$$\tan fov1 = \frac{EB}{H1} = \frac{SS}{a};$$

wherein fov1 is a field of view of the micro lens, EB is an eye movement distance, H1 is a distance between the transmission lens structure and the micro lens, and SS is an aperture of the micro lens.

14. The light-filed display apparatus according to claim 13, wherein a focal length F1 of the transmission lens structure satisfies: $\tan \frac{fov2}{2} = \frac{P1/2}{F1}$ ; wherein P1 is a width of the display panel in any eye movement distance direction, and fov2 is a field of view of the transmission lens structure.

15. The light-filed display apparatus according to claim 13 or 14, wherein a distance H1 between the micro lens and the transmission lens structure is equal to a focal length F1 of the transmission lens structure, a distance between the first light emitting plane and the micro lens is larger than the focal length of the micro lens;

a distance a between the micro lens and the first light emitting plane satisfies: $\tan fov1 = \frac{EB}{F1} = \frac{SS}{a}$ .

16. The light-filed display apparatus according to claim 13 or 14, wherein a distance H1 between the micro lens and the transmission lens structure is less than a focal length F1 of the transmission lens structure, a distance between the first light emitting plane and the micro lens is greater than the focal length of the micro lens.

17. The light-filed display apparatus according to claim 15 or 16, wherein an aperture SS of the micro lens satisfies:

$$SS = v \times P2,$$

wherein P2 is a pixel size in any eye movement distance direction.

18. The light-filed display apparatus according to claim 17, wherein a distance b between the first plane and the micro lens satisfies:

$$\frac{1}{-L1} + \frac{1}{F1-b} = \frac{1}{F1};$$

wherein L1 is a distance between an optimal depth of field plane and the transmission lens structure.

19. The light-filed display apparatus according to any one of claims 2 to 18, wherein the imaging structure further comprises:
a first substrate located between the plurality of micro lenses and the display panel and bonded to the display panel.

20. The light-filed display apparatus according to any one of claims 2 to 18, wherein the imaging structure further comprises:
a bonding frame located between the plurality of micro lenses and the display panel and bonded to the display panel in a peripheral region of the display panel.

21. The light-filed display apparatus according to any one of claims 2 to 20, wherein the imaging structure further comprises:
a first planarization layer located at a side away from the display panel, of the micro lens.

22. The light-filed display apparatus according to any one of claims 2 to 21, wherein the micro lens is a spherical lens;
a curved region of the spherical lens faces the transmission lens structure.

23. The light-filed display apparatus according to any one of claims 2 to 21, wherein the micro lens comprises a first cylindrical lens and a second cylindrical lens that are stacked; an extending direction of the first cylindrical lens and an extending direction of the second cylindrical lens intersect;
a curved region of the first cylindrical lens and a curved region of the second cylindrical lenses face the transmission lens structure.

24. The light-filed display apparatus according to any one of claims 2 to 23, wherein the transmission lens structure comprises a plurality of lenses; the plurality of lenses comprise at least one of a straight-through lens, a free-form surface lens or a Fresnel lens.

25. The light-filed display apparatus according to any one of claims 2 to 23, wherein the transmission lens structure is a folded light path structure.

26. The light-filed display apparatus according to any one of claims 2 to 25, wherein the pixel comprises a plurality of sub-pixel units; the sub-pixel unit comprises a plurality of sub-pixels with a same light emitting color;
the sub-pixel comprises:
a color film; a light emitting color of the color film corresponds to a color of the sub-pixel; a plane of a surface of the color film facing a side of the micro lens is the first light emitting plane.

27. The light-filed display apparatus according to claim 26, wherein the sub-pixel further comprises:
a light emitting device located at a side away from the micro lens, of the color film.

28. The light-filed display apparatus according to claim 27, wherein light emitting colors of a plurality of light emitting devices comprised in the display panel are same.

29. The light-filed display apparatus according to claim 27 or 28, wherein the color film extends to a region between adjacent sub-pixels; color films comprised in two adjacent sub-pixels belonging to different sub-pixel units are stacked in a region between the two adjacent sub-pixels.

30. The light-filed display apparatus of claim 26, wherein the sub-pixel further comprises:

a thin film transistor located at a side away from the micro lens, of the color film;
a pixel electrode located between the thin film transistor and the color film.

31. The light-filed display apparatus according to any one of claims 2 to 25, wherein the pixel comprises a plurality of sub-pixel units; the sub-pixel unit comprises a plurality of sub-pixels with a same light emitting color;

the sub-pixel comprises a light emitting device; in the pixel, light emitting colors of the light emitting device comprised in sub-pixel units of different types are different;
the light emitting device comprises a light emitting layer, and the first light emitting plane is a light emitting surface of the light emitting layer.

32. The light-filed display apparatus according to any one of claims 27 to 29 and 31, wherein the display panel further comprises:

an encapsulation layer located at a side facing the imaging structure, of the light emitting device, and comprising a first inorganic encapsulation layer and a second inorganic encapsulation layer sequentially stacked on a side facing the imaging structure, of the light emitting device;
a second planarization layer located at a side away from the first inorganic encapsulation layer, of the second inorganic encapsulation layer.

33. The light-filed display apparatus according to claim 32, wherein the display panel further comprises a plurality of light concentrating structures at a side away from the light emitting device, of the second planarization layer;
the light concentrating structures are in one-to-one correspondence with the sub-pixels.

34. The light-filed display apparatus according to any one of claims 1 to 33, wherein the light-filed display apparatus comprises two display panels corresponding to a left eye and a right eye respectively, two imaging structures corresponding to the left eye and the right eye respectively, and two transmission lens structures corresponding to the left eye and the right eye respectively.

35. A wearable device, comprising the light-filed display apparatus according to any one of claims 1 to 34.

Display screen

Monocular

focusing depth

Binocular
convergence depth

Left eye

Right eye

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

# EP 4 597 204 A1

## INTERNATIONAL SEARCH REPORT

International application No.

**PCT/CN2023/092367**

### A. CLASSIFICATION OF SUBJECT MATTER

G02B 27/01(2006.01)i; G02B 30/27(2020.01)i

According to International Patent Classification (IPC) or to both national classification and IPC

### B. FIELDS SEARCHED

Minimum documentation searched (classification system followed by classification symbols)

IPC: G02B 27/+, G02B 30/+

Documentation searched other than minimum documentation to the extent that such documents are included in the fields searched

Electronic data base consulted during the international search (name of data base and, where practicable, search terms used)

CNTXT, DWPI, WPABS: 京东方, 三维, 立体, "3D", 显示, 光场, 近场, 视点, 微透镜, 透镜, 成像, 图像, 焦距, 焦点, 距离, 辐辏, three w dimension+, Stereo+, display, view+, microlens, lens, imag+, focus, focal, distance

### C. DOCUMENTS CONSIDERED TO BE RELEVANT

| Category* | Citation of document, with indication, where appropriate, of the relevant passages | Relevant to claim No. |
|---|---|---|
| X | CN 114556913 A (Arizona State University Board on behalf of Arizona State University) 27 May 2022 (2022-05-27) description, paragraphs [0007]-[0092], and figures 2A-7C | 1, 34, 35 |
| Y | CN 114556913 A (Arizona State University Board on behalf of Arizona State University) 27 May 2022 (2022-05-27) description, paragraphs [0007]-[0092], and figures 2A-7C | 2-33 |
| Y | CN 114518660 A (BOE TECHNOLOGY GROUP CO., LTD.) 20 May 2022 (2022-05-20) description, paragraphs [0057]-[0127], and figures 2-9 | 2-33 |
| X | US 2017078652 A1 (THE ARIZONA BOARD OF REGENTS ON BEHALF OF THE UNIVERSITY OF ARIZONA et al.) 16 March 2017 (2017-03-16) description, paragraphs [0023]-[0036], and figures 4-7 | 1, 34, 35 |
| A | CN 106291958 A (BOE TECHNOLOGY GROUP CO., LTD.) 04 January 2017 (2017-01-04) entire document | 1-35 |
| A | CN 108345108 A (BEIJING SAMSUNG TELECOM R&D CENTER et al.) 31 July 2018 (2018-07-31) entire document | 1-35 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 July 2023** | **24 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/092367** |

**C.**     **DOCUMENTS CONSIDERED TO BE RELEVANT**

| Category* | Citation of document, with indication, where appropriate, of the relevant passages | Relevant to claim No. |
| --- | --- | --- |
| A | CN 109581678 A (CORETRONIC CORP.) 05 April 2019 (2019-04-05)<br>entire document | 1-35 |
| A | CN 111276526 A (BOE TECHNOLOGY GROUP CO., LTD.) 12 June 2020 (2020-06-12)<br>entire document | 1-35 |

Form PCT/ISA/210 (second sheet) (July 2022)

**INTERNATIONAL SEARCH REPORT**
Information on patent family members

International application No.

**PCT/CN2023/092367**

| Patent document cited in search report | | | Publication date (day/month/year) | Patent family member(s) | | | Publication date (day/month/year) |
|---|---|---|---|---|---|---|---|
| CN | 114556913 | A | 27 May 2022 | WO | 2021030430 | A1 | 18 February 2021 |
| | | | | US | 2022283431 | A1 | 08 September 2022 |
| | | | | EP | 4014483 | A1 | 22 June 2022 |
| | | | | JP | 2022544287 | A | 17 October 2022 |
| CN | 114518660 | A | 20 May 2022 | US | 2022155612 | A1 | 19 May 2022 |
| US | 2017078652 | A1 | 16 March 2017 | US | 2021006773 | A1 | 07 January 2021 |
| | | | | US | 11350079 | B2 | 31 May 2022 |
| | | | | NZ | 762223 | A | 25 February 2022 |
| | | | | US | 2017102545 | A1 | 13 April 2017 |
| | | | | US | 10469833 | B2 | 05 November 2019 |
| | | | | AU | 2021205131 | A1 | 12 August 2021 |
| | | | | EP | 3114526 | A1 | 11 January 2017 |
| | | | | EP | 3114526 | B1 | 20 October 2021 |
| | | | | AU | 2019240590 | A1 | 24 October 2019 |
| | | | | AU | 2019240590 | B2 | 22 April 2021 |
| | | | | JP | 2022020675 | A | 01 February 2022 |
| | | | | KR | 20160134714 | A | 23 November 2016 |
| | | | | KR | 102539365 | B1 | 01 June 2023 |
| | | | | CA | 2941655 | A1 | 11 September 2015 |
| | | | | CA | 2941655 | C | 09 March 2021 |
| | | | | CA | 2941653 | A1 | 11 September 2015 |
| | | | | CA | 2941653 | C | 24 August 2021 |
| | | | | US | 10326983 | B2 | 18 June 2019 |
| | | | | NZ | 724518 | A | 24 December 2021 |
| | | | | JP | 2017516154 | A | 15 June 2017 |
| | | | | JP | 6630465 | B2 | 15 January 2020 |
| | | | | AU | 2015227092 | A1 | 22 September 2016 |
| | | | | AU | 2015227092 | B2 | 04 July 2019 |
| | | | | AU | 2015227094 | A1 | 22 September 2016 |
| | | | | AU | 2015227094 | B2 | 04 July 2019 |
| | | | | BR | 112016020346 | A2 | 31 October 2017 |
| | | | | NZ | 762222 | A | 25 February 2022 |
| | | | | EP | 3114527 | A1 | 11 January 2017 |
| | | | | EP | 3114527 | B1 | 20 October 2021 |
| | | | | KR | 20160135744 | A | 28 November 2016 |
| | | | | WO | 2015134738 | A1 | 11 September 2015 |
| | | | | JP | 2020073988 | A | 14 May 2020 |
| | | | | JP | 6965330 | B2 | 10 November 2021 |
| | | | | NZ | 724519 | A | 25 February 2022 |
| | | | | US | 2019260982 | A1 | 22 August 2019 |
| | | | | US | 10805598 | B2 | 13 October 2020 |
| | | | | WO | 2015134740 | A1 | 11 September 2015 |
| | | | | JP | 2020024438 | A | 13 February 2020 |
| | | | | JP | 7102382 | B2 | 19 July 2022 |
| | | | | JP | 2017515162 | A | 08 June 2017 |
| | | | | JP | 6602797 | B2 | 06 November 2019 |
| CN | 106291958 | A | 04 January 2017 | WO | 2018072514 | A1 | 26 April 2018 |
| | | | | US | 2018252933 | A1 | 06 September 2018 |
| | | | | US | 10684408 | B2 | 16 June 2020 |
| | | | | CN | 106291958 | B | 23 April 2021 |

Form PCT/ISA/210 (patent family annex) (July 2022)

28

EP 4 597 204 A1

**INTERNATIONAL SEARCH REPORT**
Information on patent family members

International application No.

**PCT/CN2023/092367**

| Patent document cited in search report | | | Publication date (day/month/year) | Patent family member(s) | | | Publication date (day/month/year) |
|---|---|---|---|---|---|---|---|
| CN | 108345108 | A | 31 July 2018 | CN | 206618900 | U | 07 November 2017 |
| | | | | US | 2018210208 | A1 | 26 July 2018 |
| | | | | WO | 2018139880 | A1 | 02 August 2018 |
| | | | | US | 10466485 | B2 | 05 November 2019 |
| | | | | EP | 3574364 | A1 | 04 December 2019 |
| | | | | KR | 2020067980 | A | 15 June 2020 |
| CN | 109581678 | A | 05 April 2019 | EP | 3462228 | A1 | 03 April 2019 |
| | | | | TW | 201915546 | A | 16 April 2019 |
| | | | | TWI | 696848 | B | 21 June 2020 |
| | | | | JP | 2019066840 | A | 25 April 2019 |
| | | | | JP | 7060482 | B2 | 26 April 2022 |
| | | | | US | 2019094545 | A1 | 28 March 2019 |
| | | | | US | 10823967 | B2 | 03 November 2020 |
| CN | 111276526 | A | 12 June 2020 | CN | 111276526 | B | 17 January 2023 |

Form PCT/ISA/210 (patent family annex) (July 2022)